Europäisches Patentamt

European Patent Office

Office européen des brevets

(19)

(11) Numéro de publication : **0 041 416
B1**

# (12) FASCICULE DE BREVET EUROPÉEN

(45) Date de publication du fascicule du brevet :
13.06.84

(21) Numéro de dépôt : **81400696.1**

(22) Date de dépôt : **30.04.81**

(51) Int. Cl.³ : **F 02 F   3/22**, F 01 P   3/10,
F 16 J   1/16

(54) **Piston de machine à pistons alternatifs, notamment de moteur à combustion interne.**

(30) Priorité : **30.05.80 FR 8012148**

(43) Date de publication de la demande :
**09.12.81 Bulletin 81/49**

(45) Mention de la délivrance du brevet :
**13.06.84 Bulletin 84/24**

(84) Etats contractants désignés :
**BE CH DE GB IT LI NL SE**

(56) Documents cités :
**DE-B- 1 112 858
FR-A- 1 484 865
FR-A- 2 246 742
FR-A- 2 317 487
FR-A- 2 396 172
US-A- 4 005 686**

(73) Titulaire : **SOCIETE D'ETUDES DE MACHINES THER-
MIQUES S.E.M.T.
2, Quai de Seine
F-93202 Saint-Denis (FR)**

(72) Inventeur : **Munoz, Bernard
11, rue Calliope
F-95380 Puiseux (FR)**
Inventeur : **Tavenne, Eric
38-40, rue de Crimée
F-75019 Paris (FR)**

(74) Mandataire : **Weinstein, Zinovi et al
Cabinet Z. WEINSTEIN 31, Cuvillierstrasse
D-8000 München 80 (DE)**

## Description

L'invention concerne généralement un piston de machine à pistons alternatifs, notamment de moteur à combustion interne tel qu'un moteur Diesel, et a plus particulièrement pour objet un piston du type articulé par un axe de piston à un pied de bielle.

Dans la plupart des pistons connus, l'axe de piston est monté tournant dans un coussinet de pied de bielle et dans deux paliers espacés solidaires du piston et situés de part et d'autre du pied de bielle associé.

Dans ces conditions, les efforts du piston sont appliqués à l'axe de piston seulement localement de façon concentrée au niveau des paliers, ce qui entraîne des contraintes principalement de cisaillement de l'axe de piston. Ces contraintes imposent une limitation de la pression maximale de combustion.

Selon un autre type de piston connu, notamment dans le brevet français n° 2.246.742, l'axe de piston est en appui sur toute sa longueur dans un berceau transversal sensiblement semi-circulaire faisant partie intégrante de la jupe du piston et se terminant à chaque extrémité par un palier annulaire entourant entièrement l'extrémité correspondante de l'axe de piston et ne comportant pas de coussinet. Le pied de bielle ne comporte plus de palier d'axe ni donc de coussinet, mais a la forme d'un bloc qui est rendu directement solidaire de l'axe de piston par assemblage par goujons conçus de façon à présenter une certaine déformabilité élastique longitudinale. Un tel montage de l'axe de piston permet de supprimer les inconvénients précités.

De façon générale, dans les pistons connus monoblocs ou en deux pièces, la présence nécessaire, notamment dans les gros moteurs principalement Diesel, de cavités de circulation de fluide de refroidissement dans la tête de piston impose une structure relativement fine à cloisons ou parois de cavité relativement minces pour une meilleure évacuation de la chaleur. Dans le cas d'un piston en deux pièces formant respectivement la tête et la jupe du piston, l'assemblage de la tête et de la jupe doit être conçu en fonction des différentes contraintes thermiques et mécaniques auxquelles sont soumises le piston.

Dans le piston en deux pièces décrit dans le brevet français précité, la tête de piston comprend, sur sa surface d'extrémité adjacente à la jupe du piston, un évidement central formant chambre principale de refroidissement et un évidement annulaire formant chambre de refroidissement secondaire prévu au voisinage de la périphérie de la surface d'extrémité de la tête de piston. La surface d'extrémité annulaire de la tête de piston délimitée entre l'évidement central et l'évidement annulaire forme la surface de contact entre la tête et la jupe du piston. La surface d'extrémité de la jupe adjacente à la tête de piston possède également un évidement central et un évidement annulaire qui communiquent respectivement avec l'évidement central et l'évidement annulaire de la tête de piston. L'assemblage entre la tête et la jupe du piston s'effectue par des goujons qui traversent le plan de jonction de la tête et de la jupe du piston.

Il est à noter que cet assemblage s'effectue dans une zone relativement éloignée de la périphérie de la tête et de la jupe du piston. Dans ces conditions, il n'y a pas une bonne répartition des efforts entre la tête et la jupe du piston, notamment à la périphérie, c'est-à-dire au niveau des segments du piston.

L'invention a pour objet un piston du type décrit dans le brevet français précité, mais qui possède :

— une structure différente, notamment à la surface de jonction entre la tête et la jupe de piston, pour assurer une meilleure répartition des efforts et obtenir une rigidité accrue et une tenue moins aléatoire,

— une meilleure accessibilité aux goujons d'assemblage de la tête et de la jupe de piston, et

— un meilleur système de refroidissement, notamment au niveau de la tête de piston.

A cet effet, l'invention propose un piston de machine à pistons alternatifs, notamment de moteur à combustion interne, du type articulé par un axe de piston au pied de bielle associé et constitué de deux pièces formant respectivement la tête et la jupe de piston assemblées ensemble par des goujons, la tête de piston comprenant, sur sa surface d'extrémité adjacente à la jupe, un évidement central formant une partie d'une chambre de refroidissement, l'autre partie de ladite chambre étant formée par un évidement central prévu dans la surface d'extrémité adjacente de la partie centrale de la jupe ; et comprenant un système de refroidissement et de lubrification, caractérisé en ce que ladite partie centrale de la jupe est formée par un bossage central évidé sensiblement cylindrique, et en ce que le raccordement dudit bossage à la surface périphérique cylindrique de ladite jupe s'effectue par une couronne annulaire périphérique à surface supérieure plane perpendiculaire à l'axe du piston et délimitée vers l'intérieur par un épaulement centré avec ou sans étanchéité et avec ou sans jeu dans l'évidement de la tête de piston, la surface supérieure de ladite couronne formant la surface de jonction entre la jupe et la tête de piston, et sur laquelle prend appui uniquement la surface annulaire périphérique plane de la tête de piston délimitée autour dudit évidement de la tête de piston, lesdites surfaces étant traversées par les goujons et ledit évidement sensiblement cylindrique du bossage central possédant des nervures radiales pour mieux répartir les efforts transmis par la tête de piston, et en ce que lesdits goujons sont accessibles directement depuis l'extérieur au travers de la jupe de piston et dans l'axe des goujons.

Selon une autre caractéristique de l'invention, l'évidement prévu dans la tête de piston est sensiblement en forme de dôme, par exemple en anse de panier, cette configuration d'appui permettant à la tête de piston de se comporter à la manière d'une voûte autoportante dont la résistance est d'autant meilleure que la charge est plus importante.

Selon une autre caractéristique de l'invention, au moins deux ouvertures sont prévues dans la surface périphérique cylindrique de la jupe de piston, pour accéder directement aux goujons d'assemblage de la tête et de la jupe de piston, chaque goujon traversant de part en part un orifice associé qui est usiné dans la couronne annulaire périphérique du bossage central de la jupe et pénétrant dans un orifice borgne au moins en partie fileté usiné dans la tête de piston.

D'une façon connue en soi, l'axe de piston possède dans sa partie médiane un évidement dans lequel est reçue l'extrémité libre du pied de bielle associé rendu directement solidaire de l'axe de piston par au moins un goujon présentant une certaine déformabilité élastique longitudinale. En outre, l'axe de piston est monté dans un logement en forme de berceau semi-circulaire, prévu à la surface d'extrémité du bossage central de la jupe opposée à la tête de piston, et se terminant à chaque extrémité par un palier annulaire supportant directement l'extrémité associée de l'axe de piston.

Selon une autre caractéristique du piston conforme à l'invention le système de lubrification et de refroidissement comprend une rainure usinée dans l'évidement précité de l'axe de piston, s'étendant dans un plan perpendiculaire à l'axe de piston et symétriquement par rapport au plan transversal médiateur de l'axe de piston, et dont le sommet présente deux élargissements ayant chacun une forme sensiblement trapézoïdale isocèle dans le plan médian vertical longitudinal de l'axe de piston, cette rainure communiquant avec l'extrémité d'un canal d'alimentation de fluide de refroidissement et de lubrification, s'étendant dans le corps de bielle associé et débouchant à la surface d'extrémité du pied de bielle.

Selon une autre caractéristique de l'invention, deux canaux obliques de lubrification sont usinés dans l'axe de piston et débouchent respectivement, à une extrémité, dans les deux faces plates obliques desdits élargissements de la rainure, alors que les deux autres extrémités des deux canaux obliques débouchent respectivement dans deux rainures circulaires prévues respectivement dans les deux extrémités de l'axe de piston au droit des paliers annulaires supportant les extrémités de l'axe de piston.

La rainure usinée dans l'axe de piston communique également avec la chambre de refroidissement, et selon une autre forme d'exécution préférée, afin d'augmenter le refroidissement, l'évidement usiné dans la tête de piston et formant une partie de la chambre de refroidissement comprend avantageusement une pluralité de trous borgnes permettant au liquide de refroidissement d'atteindre les points les plus chauds de la tête de piston sans affaiblir la résistance mécanique de cette tête.

La présence de la rainure usinée dans l'axe de piston présente un avantage important, notamment dans le cas où le corps de bielle présente une section transversale en forme de H et où le canal d'alimentation ou d'amenée en liquide de refroidissement et le lubrification est situé dans une aile du profil en étant par conséquent décalé de l'axe longitudinal de la bielle. En effet, une telle rainure permet d'assurer une symétrie de montage de l'axe de piston.

D'autres avantages, caractéristiques et détails apparaîtront plus clairement à l'aide de la description explicative qui va suivre faite en référence aux dessins annexés, donnés uniquement à titre d'exemple et dans lesquels :

La figure 1 est une vue en coupe longitudinale du piston conforme à l'invention.

La figure 2 est une vue en coupe suivant la ligne II-II de la figure 1.

La figure 3 est une vue en coupe agrandie suivant la ligne III-III de la figure 1 ; et

**la figure 4 est une vue en coupe agrandie suivant la ligne IV-IV de la figure 1.**

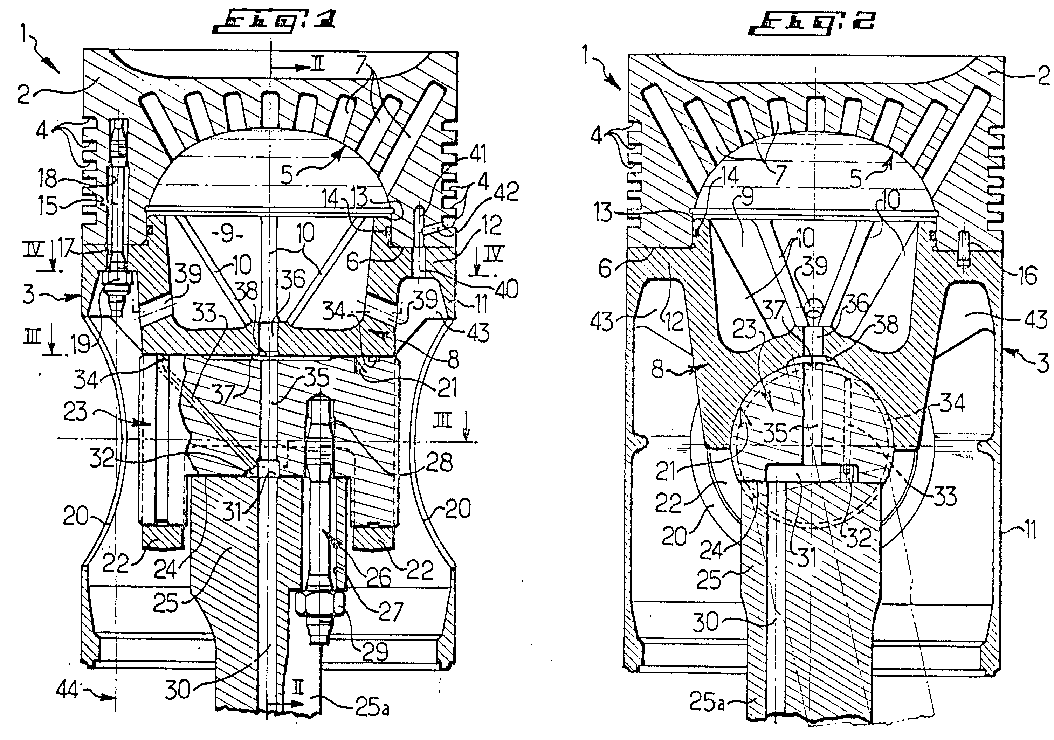

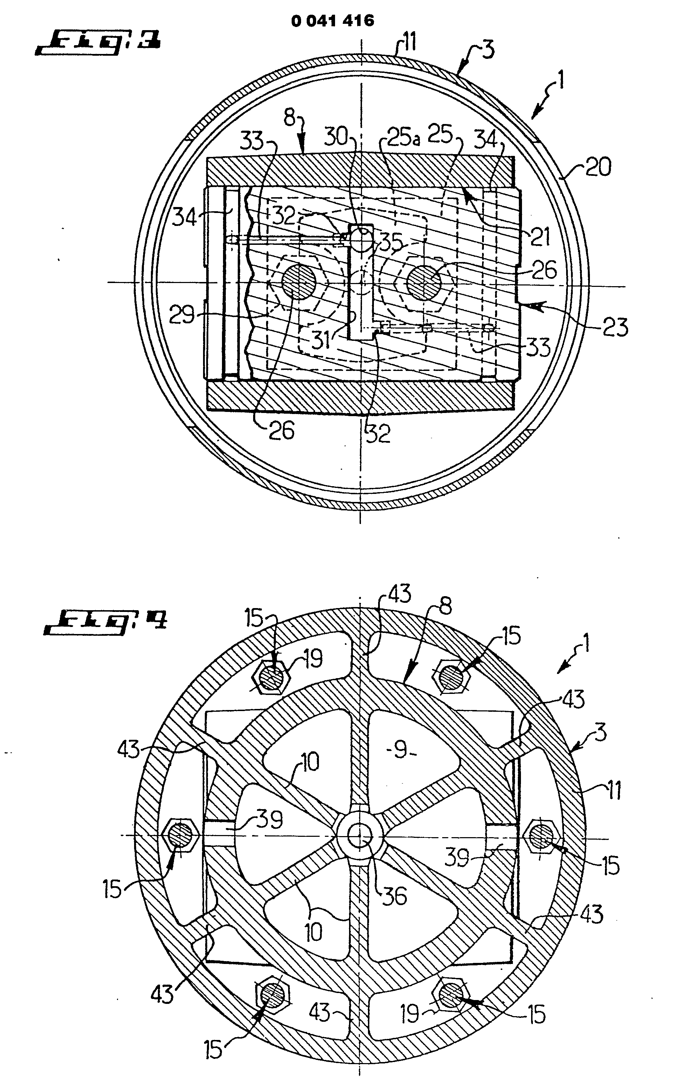

Le piston 1 conforme à l'invention représenté sur les différentes figures, notamment sur les figures 1 et 2, est constitué de deux pièces formant respectivement la tête 2 et la jupe 3 de piston. La tête 2 et la jupe 3 de piston sont de forme cylindrique et montées coaxialement dans le prolongement l'une de l'autre.

Plusieurs gorges 4 espacées, parallèles entre elles sont prévues dans la surface périphérique cylindrique de la tête de piston 2. Dans chaque gorge 4 est monté un segment de piston (non représenté). Tous les segments sont donc supportés par la tête de piston 2.

La surface d'extrémité ou extrémité terminale de la tête de piston 2, en regard de la jupe de piston 3, possède un évidement central 5 formant la première partie d'une chambre de refroidissement intérieure principale du piston. Cet évidement central 5 présente plusieurs caractéristiques :

— il est avantageusement en forme de dôme par exemple en anse de panier, cette configuration d'appui permettant à la tête de piston 2 de se comporter à la manière d'une voûte auto-portante dont la résistance est d'autant meilleure que la charge est plus importante,

— il délimite, au niveau de la surface d'extrémité de la tête de piston 2 adjacente à la jupe de piston 3, une surface périphérique annulaire plane 6 perpendiculaire à l'axe du piston et formant surface de liaison ou de contact pour l'assemblage de la tête de piston 2 et de la jupe de piston 3, et

— il se prolonge à l'intérieur de la tête de piston 2 par plusieurs trous borgnes 7 à fond plat ou sphérique pour augmenter le volume de la chambre de refroidissement principale du piston, mais surtout pour atteindre les points les plus chauds de la tête de piston 2 sans affaiblir la résistance mécanique de cette tête.

La jupe de piston 3 possède un bossage central évidé 8. Plus précisément, le bossage 8 possède un évidement central 9 à sa surface d'extrémité en regard de la tête de piston 2. Cet évidement 9 de forme sensiblement cylindrique possède plusieurs caractéristiques :

— il forme la seconde partie de la chambre de refroidissement principale du piston, et

— il renferme plusieurs nervures radiales 10 ou voiles permettant de mieux répartir les efforts transmis par la tête de piston.

Le bossage central 8 est raccordé à l'enveloppe périphérique extérieure cylindrique 11 de la jupe de piston 3 par une couronne périphérique annulaire plane 12 perpendiculaire à l'axe du piston. La surface d'extrémité supérieure de cette couronne 12 en regard de la tête de piston 2 forme la surface de liaison ou de contact sur laquelle prend appui la surface périphérique annulaire 6 de la tête de piston 2. La couronne 12, à son extrémité supérieure adjacente à la tête de piston 2, est délimitée vers l'intérieur par un épaulement 13 centré avec ou sans jeu dans l'évidement 5 de la tête de piston 2 avec interposition ou non d'un joint d'étanchéité annulaire 14.

L'assemblage entre la tête de piston 2 et la jupe de piston 3 s'effectue par l'intermédiaire de plusieurs goujons 15 qui traversent chacun le plan de jonction défini par les surfaces d'extrémité périphérique annulaires en regard de la tête de piston 2 et de la couronne 12 de la jupe de piston 3. Le positionnement de la tête de piston 2 sur la jupe de piston 3 s'effectue par l'intermédiaire d'un pion de guidage 16 (figure 2).

Chaque goujon 15 traverse un orifice 17 associé qui est usiné dans la couronne annulaire 12 de la jupe de piston 3 et pénètre dans un orifice 18 au moins en partie filetée, en regard de l'orifice 17 et usiné dans la tête de piston 2. Chaque goujon 15 est bloqué par un écrou 19 monté autour de l'extrémité libre du goujon 15 faisant saillie au-delà de la surface d'extrémité de la couronne 12 opposée à la tête de piston 2. Pour assurer cet assemblage, l'enveloppe périphérique extérieure 11 de la jupe de piston 3 est avantageusement pourvue d'au moins deux orifices 20, par exemple diamètralement opposés, permettant d'assurer directement le montage et le démontage des goujons 15. Il est également possible d'accéder directement à ces goujons depuis l'extérieur au travers de la jupe 3 comme indiqué en 44 sur la figure 1 et indépendamment des orifices 20 sans aucun démontage préalable.

La surface d'extrémité du bossage central 8 de la jupe de piston 3 opposée à la tête de piston 2, possède un évidement 21 par exemple en force de berceau sensiblement semi-circulaire et terminé à chaque extrémité par un palier annulaire 22.

L'axe de piston 23, perpendiculaire à l'axe géométrique du piston 1, est monté directement dans le berceau 21 et est supporté directement à chaque extrémité par le palier associé 22 du berceau 21. L'axe de piston 23 est introduit dans le berceau 21 par l'un des orifices 20 de la jupe de piston 3.

L'axe de piston 23 possède, dans sa partie médiane, un évidement 24 dans lequel est reçue l'extrémité libre du pied de bielle 25 associé rendu directement solidaire de l'axe de piston 23 par au moins un goujon 26 présentant une certaine déformabilité élastique longitudinale.

Dans le mode de réalisation représenté (figures 1 et 3), le pied de bielle 25 a la forme d'un bloc parallélépipédique plein, alors que le corps de la bielle 25a possède un profil de section transversale en forme de H qui permet de monter facilement chaque goujon d'assemblage 26 entre le pied de bielle 25 et l'axe de piston 23. Plus précisément, chaque goujon 26 traverse un orifice 27 prévu dans le pied de bielle 25, puis un alésage borgne 28 en partie fileté usiné dans l'axe de piston 23 et qui débouche en regard de l'orifice 27. un écrou 29 assure le blocage du goujon 26.

Le piston 1 conforme à l'invention comprend un système de lubrification et de refroidissement alimenté à partir d'un canal 30 usiné dans le corps de la bielle et débouchant à la surface d'extrémité du pied de bielle 25. Dans l'exemple représenté (figures 2 et 3) ce canal 30 est décalé par rapport à l'axe de la bielle et traverse le corps 25a de la bielle au niveau d'une aile formée par la section en H du corps 25a de la bielle, c'est-à-dire dans une partie de plus grande matière pour ne pas limiter la résistance de cette bielle.

Ce canal 30 débouche à la surface d'extrémité du pied de bielle 25 dans un évidement en forme de rainure 31 (figures 2, 3) usiné dans l'évidement 24 de l'axe de piston 23. Cette rainure a une section transversale sensiblement rectangulaire et s'étend dans un plan perpendiculaire à l'axe de piston 23. Au sommet de cette rainure 31 (figures 1 et 3), et sensiblement vers les deux extrémités de cette rainure, sont ménagés deux élargissements 32 ayant une forme sensiblement trapézoïdale dans le plan médian vertical longitudinal de l'axe de piston 23. Les faces planes obliques de ces élargissements 32 (figure 3) permettent respectivement les perçages directs de deux canaux obliques 33 symétriques de lubrification débouchant chacun dans une rainure 34 circulaire de l'extrémité de l'axe de piston 25 au droit du palier annulaire 22 correspondant.

La rainure 31 communique avec la chambre de refroidissement (5, 9) du piston 1 par deux canaux 35, 36. Le canal 35 (figure 1) traverse l'axe de piston 23 et débouche dans une gorge 37 parallèle à l'axe de piston 23 ou en hélice et destinée à assurer un graissage de l'appui entre l'axe de piston 23 et le berceau 21 dans la zone située entre les deux paliers extrêmes 22 du berceau 21. Le canal 36 traverse le bossage central 8 de la jupe de piston 3 et débouche, du côté de l'axe de piston 23, dans une rainure arquée 38 usinée dans la paroi interne du berceau 21 de la jupe de piston 3. La rainure arquée 38 est telle que lors des déplacements du piston entraînant une articulation du pied de bielle, le canal 35 reste toujours en communication avec cette rainure 38 pour l'alimentation permanente de la chambre de refroidissement (5, 9).

La chambre de refroidissement (5, 9) communique avec l'extérieur par au moins un orifice latéral 39 usiné dans le bossage central 8 de la jupe de piston 3. Chaque orifice 39 débouche dans l'espace délimité entre le bossage central 8 et l'enveloppe extérieure périphérique 11 de la jupe de piston 3.

En se reportant à nouveau à la figure 1, la couronne périphérique 12 du bossage central 8 de la jupe de piston 3 possède au moins un orifice 40 qui débouche dans un orifice borgne 41 usiné dans la tête de piston 2. Dans l'alésage borgne 41 débouche l'extrémité d'un canal 42 dont l'autre extrémité communique avec la gorge 4 dans laquelle est monté le segment racleur. Cette disposition permet d'évacuer le liquide de lubrification, tel que de l'huile, en surplus au niveau de ce segment.

Il est à noter également que pour augmenter encore la rigidité du piston, notamment au niveau de l'enveloppe extérieure périphérique 11 de la jupe de piston 3, sont prévues des nervures de renforcement 43 s'étendant entre la surface périphérique extérieure du bossage central 8 et l'enveloppe extérieure périphérique 11 de la jupe de piston 3 (figures 1 et 4). Ces nervures permettent aussi de mieux transmettre les efforts de la couronne 12 en direction de l'axe de piston 23.

Un tel piston présente une très bonne tenue aux efforts, notamment au niveau de l'assemblage entre la tête de piston 2 et la jupe de piston 3, bien que la surface de jonction soit relativement réduite.

La présence de la rainure 31 dans l'axe de piston 23, permet un montage symétrique de l'axe de piston 23 dans son berceau 21, étant donné que le canal d'alimentation en fluide de lubrification et de refroidissement est décalé par rapport à l'axe de la bielle.

Le piston conforme à l'invention peut avoir une tête de piston 2 en acier et une jupe de piston 3 en fonte. La jupe de piston 3 est de préférence constituée en au moins une pièce pour faciliter sa fabrication.

Le fonctionnement d'un piston conforme à l'invention est tout à fait classique et il n'est pas nécessaire de le décrire plus en détail. Cependant, il est à noter que pendant la phase de combustion notamment, l'axe de piston 23 est en contact avec le fond supérieur du berceau 21, de sorte que les forces de pression sont uniformément réparties tout le long de l'axe. Lors de la phase de balayage durant la course ascendante du piston 1, l'axe de piston 23 porte contre la partie inférieure des paliers annulaires 22, c'est-à-dire que la réaction est locale, ce qui n'est pas gênant car les forces d'inertie agissant à ce moment sont approximativement dix fois plus faibles que les forces de pression de combustion. Les goujons 26 assurant l'assemblage entre le pied de bielle 25 et l'axe de piston 23, présentent avantageusement une déformabilité élastique longitudinale, c'est-à-dire un allongement par traction sous l'effet des écrous (29) serrés contre la tête de bielle 25 relativement rigide.

Ainsi, un piston conforme à l'invention présente une tête et une jupe de piston qui, une fois assemblées, assurent une transmission plus homogène des efforts vers l'axe de piston. En outre, des risques de baillement entre la tête et la jupe vers la périphérie extérieure de leur surface de contact étant supprimés, on obtient une meilleure tenue de la segmentation.

Enfin, il est important de noter que l'accès aux goujons d'assemblage entre la tête et la jupe de piston peut se faire directement de l'extérieur au travers de la jupe et dans l'axe des goujons. On peut donc accéder à ces goujons sans démonter l'assemblage axe de piston-bielle.

**Revendications**

1. Piston de machines à pistons alternatifs, notamment de moteur à combustion interne, du type articulé par un axe de piston (23) au pied de bielle associé et constitué de deux pièces formant respectivement la tête (1) et la jupe (3) de piston assemblées ensemble par des goujons (15), la tête de piston comprenant, sur sa surface d'extrémité adjacente à la jupe, un évidement central (5) formant une partie d'une chambre de refroidissement (9), l'autre partie de ladite chambre étant formée par un évidement central prévu dans la surface d'extrémité adjacente de la partie centrale de la jupe (3) ; et comprenant un système de refroidissement et de lubrification, caractérisé en ce que ladite partie centrale de la jupe est formée par un bossage central évidé (8) sensiblement cylindrique, en ce que le raccordement dudit bossage à la surface périphérique cylindrique de ladite jupe s'effectue par une couronne annulaire périphérique (12) à surface supérieure plane perpendiculaire à l'axe du piston (23) et délimitée vers l'intérieur par un épaulement (13) qui est centré dans l'évidement de la tête du piston, la surface supérieure de ladite couronne formant la seule surface de jonction entre la jupe et la tête du piston, et sur laquelle prend appui uniquement la surface annulaire périphérique plane (6) de la tête de piston délimitée autour dudit évidement de la tête de piston, lesdites surfaces étant traversées par les goujons (15) et ledit évidement sensiblement cylindrique du bossage central possédant des nervures radiales (10) pour mieux répartir les efforts transmis par la tête de piston, et en ce que lesdits goujons (15) sont accessibles directement depuis l'extérieur au travers de la jupe (3) de piston et dans l'axe des goujons.

2. Piston selon la revendication 1, caractérisé en ce que l'évidement précité prévu dans la tête (1) du piston est sensiblement en forme de dôme, par exemple en anse de panier, cette configuration d'appui permettant à la tête de piston de se comporter à la manière d'une voûte auto-portante.

3. Piston selon la revendication 1 ou 2, caractérisé en ce que chaque goujon (15) précité traverse de part en part un orifice associé (17) qui est usiné dans la couronne annulaire (12) du bossage central de la jupe (3) de piston et pénétrant dans un orifice borgne (18) au moins en partie fileté usiné dans la tête de piston.

4. Piston selon l'une des revendications précédentes dans lequel l'axe de piston (23) possède dans sa partie médiane un évidement (24) dans lequel est reçue l'extrémité libre du pied de bielle (25) associé rendu directement solidaire de l'axe de piston par au moins un goujon (26) présentant une certaine déformabilité élastique longitudinale, l'axe de piston étant monté dans un logement (21) en forme de berceau semi-circulaire, prévu à la surface d'extrémité de bossage central précité de la jupe de piston opposée à la tête de piston et se terminant à chaque extrémité par un palier annulaire (22) supportant directement l'extrémité associée de l'axe du piston, caractérisé en ce que le système de lubrification et de refroidissement précité comprend une rainure usinée (31) dans ledit évidement (24) de l'axe du piston, s'étendant dans un plan perpendiculaire à l'axe de piston et symétriquement par rapport au plan transversal médiateur de l'axe de piston et dont le sommet présente deux élargissements (32) ayant chacun une forme sensiblement trapézoïdale dans le plan médian vertical longitudinal de l'axe de piston, ladite rainure communiquant avec l'extrémité d'un canal (30) d'alimentation de fluide de refroidissement et de lubrification s'étendant dans le corps de bielle associé et débouchant à la surface d'extrémité du pied de bielle (25).

5. Piston selon la revendication 4, caractérisé en ce que le système de lubrification précité comprend deux canaux obliques (33) usinés dans l'axe de piston (23) précité et qui débouchent respectivement, à une extrémité, dans les deux faces planes obliques des élargissements (32) de la rainure précitée, alors que les deux autres extrémités desdits canaux obliques débouchent respectivement dans deux rainures circulaires (34) prévues respectivement dans les deux extrémités de l'axe de piston au droit des paliers annulaires (22) précités supportant les extrémités de l'axe de piston (23).

6. Piston selon la revendication 4 ou 5, caractérisé en ce que la rainure précitée usinée dans l'évidement de l'axe de piston communique avec la chambre de refroidissement (5, 9) précitée par deux canaux (35, 36) usinés respectivement dans l'axe de piston et dans le bossage précité de la jupe (3) du piston, le canal traversant l'axe de piston débouchant dans une gorge (37) parallèle à l'axe de piston et s'étendant sur une partie d'une génératrice dudit axe, alors que ledit canal traversant le bossage central de la jupe de piston débouche du côté de l'axe de piston dans une rainure arquée (38) usinée dans la paroi interne du berceau (21) précité de la jupe de piston de manière à assurer une alimentation continue de la chambre de refroidissement lors des déplacements du piston.

7. Piston selon l'une des revendications précédentes, caractérisé en ce qu'il comprend des nervures (43) de renforcement montées entre la surface périphérique extérieure du bossage central (8) précité de la jupe de piston et l'enveloppe extérieure périphérique (11) de la jupe de piston.

8. Piston selon l'une des revendications précédentes, caractérisé en ce que l'enveloppe périphérique extérieure (11) précitée de la jupe (3) de piston possède au moins deux orifices (20) par exemple diamètralement opposés, pour permettre d'une part le montage et le démontage des goujons d'assemblage (15) précités de la tête et de la jupe de piston et d'autre part, le montage de l'axe de piston (23) dans le berceau (21) précité de la jupe de piston.

9. Moteur à combustion interne, caractérisé en ce que dans chaque cylindre est monté un piston tel que défini selon l'une des revendications précédentes.

**Claims**

1. Piston for machines with reciprocating pistons, in particular for an internal combustion engine, of the kind pivotally connected by a wrist pin (23) to the associated connecting rod small end and consisting of two parts forming the **piston head (1) and skirt (3), respectively, assembled together by dowels (15), the piston head** comprising, on its end surface adjacent to the skirt, a central recess (5) forming part of a cooling chamber (9), the other part of the said chamber being formed of a central recess provided in the adjacent end surface of the central portion of the skirt (3) ; and comprising a cooling and lubricating system, characterized in that the said central portion of the skirt is formed of a substantially cylindrical central recessed boss (8), in that the connection of the said boss with the peripheral cylindrical surface of the said skirt is made through a peripheral annular crown, (12) with a flat top surface extending at right angles to the wrist pin (23) and defined inwards by a shoulder (13) which is centred within the recess in the piston head, the top surface of the said crown forming the only junction surface between the skirt and the piston head and on which only bears the flat peripheral annular surface (6) of the piston head defined about the said recess of the piston head, the dowels (15) extending through the said surfaces and the said substantially cylindrical recess of the central boss having radial ribs (10) for better distributing the forces conveyed by the piston head, and in that the said dowels (15) are directly accessible from the outside through the skirt (3) of the piston and along the centre lines of the dowels.

2. Piston according to claim 1, characterized in that the said recess, provided in the piston head (1), is substantially dome-shaped, for instance in the shape of a basket handle, this bearing configuration enabling the piston head to behave like a self-supporting arch.

3. Piston according to claim 1 or 2, characterized in that each aforesaid dowel (15) extends right through an associated aperture (17) which is machined in the annular crown (12) of the central boss of the piston skirt (3) and extends into an at least partly threaded blind hole (18) machined in the piston head.

4. Piston according to one of the foregoing claims, wherein the wrist pin (23) has in its middle part a recess (24) in which is received the free end of the associated connecting rod small end (25) made directly fast with the wrist pin by at least one dowel (26) exhibiting some longitudinal resilient deformability, the wrist pin being mounted in a housing (21) shaped as a semi-circular cradle, provided at that end surface of the said central boss of the piston skirt which is opposite to the piston head and terminating at each end in an annular bearing (22) directly supporting the associated end of the wrist pin, characterized in that the aforesaid lubricating and cooling system comprises a groove (31) machined into the said recess (24) of the wrist pin, extending in a plane perpendicular to the wrist pin and symmetrical with respect to the transverse centre plane of the wrist pin and the top of which exhibits two enlarged portions (32) having each one a substantially trapezoidal shape in the longitudinal vertical centre plane of the wrist pin, the said groove communicating with the end of a cooling and lubricating fluid feed duct (30) extending in the associated connecting rod shank and opening at the end surface of the connecting rod small end (25).

5. Piston according to claim 4, characterized in that the aforesaid lubrication system comprises two oblique ducts (33) machined in the aforesaid wrist pin (23) and which open, at one end respectively, into both oblique flat faces of the enlarged portions (32) of the aforesaid groove whereas the two other ends of the said oblique ducts open into two circular grooves (34), respectively, provided in both ends, respectively, of the wrist pin at the aforesaid annular bearings (22) carrying the ends of the wrist pin (23).

6. Piston according to claim 4 or 5, characterized in that the aforesaid groove machined in the recess of the wrist pin communicates with the aforesaid cooling chamber (5, 9) through two ducts (35, 36) machined in the wrist pin and in the aforesaid boss of the piston skirt (3), respectively, the duct extending through the wrist pin opening into a groove (37) parallel to the wrist pin and extending over a portion of one generating line of the said pin whereas the said duct extending through the central boss of the piston skirt opens towards the wrist pin into an arcuate groove (38) machined in the inner wall of the aforesaid cradle (21) of the piston skirt so as to provide for a continuous feeding of the cooling chamber upon displacements of the piston.

7. Piston according to one of the foregoing claims, characterized in that it comprises reinforcing ribs (43) mounted between the outer peripheral surface of the aforesaid central boss (8) of the piston skirt and the peripheral outer shell (11) of the piston skirt.

8. Piston according to one of the foregoing claims, characterized in that the aforesaid outer peripheral shell (11) of the piston skirt (3) has at least two for instance diametrally opposed openings (20) for making possible on the one hand the mounting and removing of the aforesaid dowels (15) for assembling the piston head and skirt and on the other hand the mounting of the wrist pin (23) into the aforesaid cradle (21) of the piston skirt.

9. Internal combustion engine, characterized in that in each cylinder is mounted a piston such as defined according to one of the foregoing claims.

**Ansprüche**

1. Kolben für Maschinen mit hinundhergehenden Kolben, insbesondere für Brennkraftmaschine, derjenigen Bauart, die über einen Kolbenbolzen (23) an dem zugeordneten kolbenseitigen Pleuelstangenkopf angelenkt ist und aus zwei jeweils dem Kolbenkopf (1) und dem Kolbenmantel (3) bildenden, durch Passtifte (15) zusammengefügten Teilen besteht, wobei der Kolbenkopf an seiner dem Kolbenmantel zugewandten Endfläche, eine ein Teil einer Kühlkammer (9) bildende mittlere Ausnehmung (5) aufweist, wobei das andere Teil der besagten Kammer durch eine in der benachbarten Endfläche des mittleren Teils des Mantels (3) vorgesehene mittlere Aussparung gebildet wird; und umfassend eine Kühl- und Schmiereinrichtung, dadurch gekennzeichnet, dass das besagte mittlere Teil des Mantels durch einen im wesentlichen zylindrischen ausgehöhlten mittleren Ansatz (8) gebildet wird, dass der Uebergang des besagten Ansatzes auf die zylindrische Umfangsfläche des besagten Mantels durch einen ringförmigen Umfangskranz (12) mit sich senkrecht zum Kolbenbolzen (23) erstreckenden flachen Oberseite geschieht, welcher Kranz innenseitig durch eine schulter (13) die in der Ausnehmung des Kolbenkopfes zentriert ist, begrenzt ist, wobei die Oberseite des besagten Kranzes die einzige Verbindungsfläche zwischen dem Kolbenmantel und dem Kolbenkopf bildet und auf welchersich lediglich die um die besagte Ausnehmung des Kolbenkopfes herum begrenzte flache ringförmige Umfangsfläche (6) des Kolbenkopfes abstützt, wobei die besagten Flächen durch die Passtifte (15) durchsetzt sind und die besagte im wesentlichen zylindrische Aussparung des mittleren Ansatzes radiale Rippen (10) aufweist, um die durch den Kolbenkopf übertragenen Kräfte besser zu verteilen, und dass die besagten Passtifte (15) unmittelbar von aussen her durch den Kolbenmantel (3) hindurch und in der Mittellinie der Passtifte zugänglich sind.

2. Kolben nach Anspruch 1, dadurch gekennzeichnet, dass die in dem Kolbenkopf (1) vorgesehene vorgenannte Ausnehmung im wesentlichen domförmig, z. B. korbbogenförmig ausgebildet ist, wobei dieses Abstützungsgebilde dem Kolbenkopf ermöglicht, sich wie ein selbsttragendes Gewölbe zu verhalten.

3. Kolben nach Anspruch 1 oder 2, dadurch gekennzeichnet, dass jeder vorgenannte Passtift (15) eine zugeordnete Bohrung (17), die in dem ringförmigen Kranz (12) des mittleren Ansatzes des Kolbenmantels (3) eingearbeitet ist, gänzlich durchsetzt und sich in ein wenigstens teilweise gewindetes, in dem Kolbenkopf eingearbeitetes Sackloch (18) erstreckt.

4. Kolben nach einem der vorangehenden Ansprüche, bei welchem der Kolbenbolzen (23) in seinem mittleren Teil eine Ausnehmung (24) aufweist, in welche das freie Ende des zugeordneten, mit dem Kolbenbolzen unmittelbar über wenigstens einen eine gewisse elastische Verformbarkeit in Längsrichtung aufweisenden Passtift (26) festverbundenen kolbenseitigen Pleuelstangenkopfes (25) aufgenommen wird, wobei der Kolbenbolzen in einem an der dem Kolbenkopf abgewandten Endfläche des vorgenannten mittleren Ansatzes des Kolbenmantels vorgesehenen und an jedem Ende mit einem das zugeordnete Ende des Kolbenbolzens unmittelbar tragenden ringförmigen Lager (22) endenden halbrunden wiegeförmigen Sitz (21) gelagert ist, dadurch gekennzeichnet, dass die vorgenannte Schmier- und Kühleinrichtung eine in die besagte Ausnehmung (24) des Kolbenbolzens eingearbeitete, in einer sich senkrecht zum Kolbenbolzen erstreckenden Ebene und symmetrisch zur mittleren Querebene des Kolbenbolzens verlaufende Nut (31) aufweist, deren Oberteil zwei Erweiterungen (32) aufweist, von welchen jede eine im wesentlichen trapezförmige Gestalt in der lotrechten mittleren Längsebene des Kolbenbolzens aufweist, wobei die besagte Nut mit dem Ende eines sich in dem zugeordneten Pleuelstangenschaft erstreckenden und an der Endfläche des kolbenseitigen Pleuelstangenkopfes (25) mündenden Kühl- bzw. Schmiermittel Zufuhrkanals (30) in Verbindung steht.

5. Kolben nach Anspruch 4, dadurch gekennzeichnet, dass die vorgenannte Schmiereinrichtung zwei schräge, in dem vorgenannten Kolbenbolzen (23) eingearbeitete Kanäle (33) umfasst, welche jeweils an einem Ende in zwei schrägen ebenen Flächen der Erweiterungen (32) der vorgenannten Nut münden, während die beiden anderen Enden der besagten schrägen Kanäle jeweils in zwei kreisförmigen Nuten (34) münden, die jeweils in den beiden Enden des Kolbenbolzens bei den vorgenannten, die Enden des Kolbenbolzens (23) tragenden ringförmigen Lagern (22) vorgesehen sind.

6. Kolben nach Anspruch 4 oder 5, dadurch gekennzeichnet, dass die vorgenannte, in der Ausnehmung des Kolbenbolzens eingearbeitete Nut mit der vorgenannten Kühlkammer (5, 9) über zwei jeweils in dem Kolbenbolzen und in dem vorgenannten Ansatz des Kolbenmantels (3) eingearbeitete Kanäle (35, 36) in Verbindung steht, wobei der den Kolbenbolzen durchsetzende Kanal in eine mit dem Kolbenbolzen gleichgerichtete Nut (37) mündet und sich über einen Teil einer Erzeugenden des besagten Bolzens erstreckt, während der besagte den mittleren Ansatz des Kolbenmantels durchsetzende Kanal kolbenbolzenseitig in eine bogenförmige, in die innere Wandung der vorgenannten Wiege (21) des Kolbenmantels eingearbeitete Nut (38) mündet, um derart eine stetige Speisung der Kühlkammer während der Bewegungen des Kolbens zu gewährleisten.

7. Kolben nach einem der vorangehenden Ansprüche, dadurch gekennzeichnet, dass er zwischen der äusseren Umfangsfläche des vorgenannten mittleren Ansatzes (8) des Kolbenmantels und der äusseren Umfangshülle (11) des Kolbenmantels angeordnete Verstärkungsrippen (43) aufweist.

8. Kolben nach einem der vorangehenden Ansprüche, dadurch gekennzeichnet, dass die vorgenannte äussere Umfangshülle (11) des Kolbenmantels (3) wenigstens zwei z. B. diametral entgegengesetzte Oeffnungen (20) aufweist, um einerseits den Einbau und den Ausbau der vorgenannten Passstifte (15) zur Zusammenfügung des Kolbenkopfes und des Kolbenmantels und andererseits den Einbau des Kolbenbolzens (23) in die vorgenannte Wiege (21) des Kolbenmantels zu ermöglichen.

9. Brennkraftmaschine, dadurch gekennzeichnet, dass in jedem Zylinder ein gemäss einem der vorangehenden Ansprüche beschriebener Kolben eingebaut ist.

0 041 416

0 041 416

Fig. 3

Fig. 4

2